# EUROPEAN PATENT SPECIFICATION

(11) **EP 2 060 408 B1**
(45) Date of publication and mention of the grant of the patent: **04.05.2011**
(21) Application number: 07425730.4
(22) Date of filing: 19.11.2007
(51) Int. Cl.: B60B 7/04, B60B 7/06

(54) **Hubcap for the wheel of a large-sized vehicle, such as a lorry**
Radkappe für das Rad eines großen Fahrzeugs, etwa eines Lastwagens
Cache-moyeu pour un véhicule à grande taille, tel qu'un camion

(43) Date of publication of application: 20.05.2009
(73) Proprietor: Lupini Targhe S.p.A., 24040 Pognano (Bergamo) (IT)
(72) Inventor: Capuzzi, Angiolino, 25020 Dello (Brescia) (IT)
(74) Representative: Pulieri, Gianluca Antonio

(56) References cited:
- EP-A- 0 641 678
- GB-A- 362 070
- US-A- 5 503 465
- US-A1- 2005 040 696

## Description

. The present invention relates to a hubcap for the wheel of a large-sized vehicle, such as a lorry, where the dimensions of the wheel rim are much greater than those of standard cars.

. Up until today, large-sized vehicles haven't been provided with wheel hubcaps, as it was assumed that being an aesthetic equipment, they were not of interest for vehicles specifically dedicated to working activities.

. However, it has been recently observed that also for this sector there is particular focus on aesthetics, both for valorising the brand of the vehicle manufacturer to the purchaser's eyes, and for valorising the image of companies using such vehicles to the observer's eyes, such as distribution companies and similar.

. Nonetheless, due to the typical dimensions and geometry of the wheel rim of a large-sized vehicle, it is not possible to use a standard hubcap for cars, e.g. by simply adjusting its dimensions to large-sized vehicles.

. The aim of the present invention is to provide a hubcap for the wheel rims of large-sized vehicles, such as lorries and similar. Examples of a hubcap for the wheel of a large-sized vehicle, such as a lorry are shown in documents US-A-5 503 465 and US 2005/0040696 A1.

. This aim is achieved by a hubcap according to following claim 1.

. Further advantages may also be achieved through the additional features of the dependent claims.

. Features and advantages of the hubcap according to the present invention will be obvious from the below description, made by way of an indicative and non-limiting example, according to the following figures, wherein:

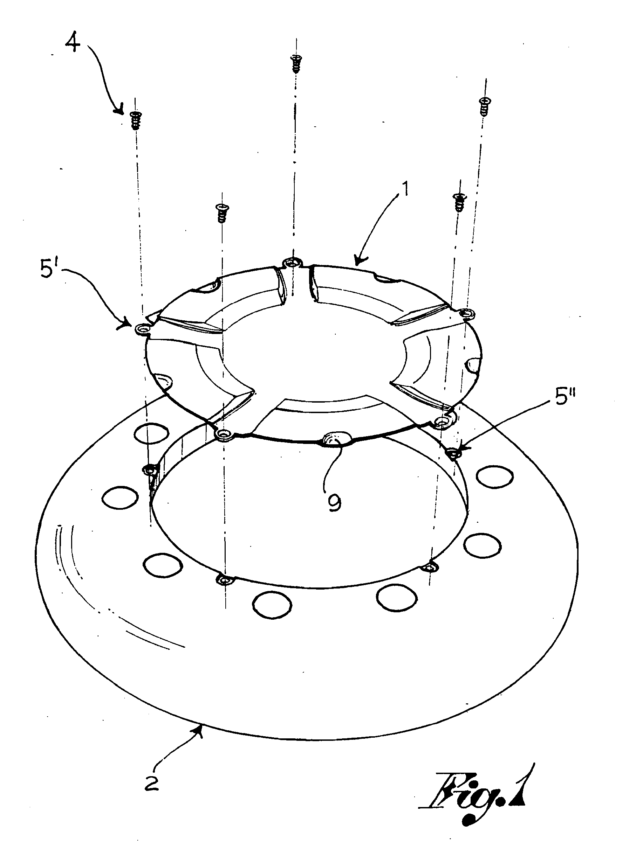

. - figure 1 shows a perspective view with separated parts of the hubcap according to a first embodiment;

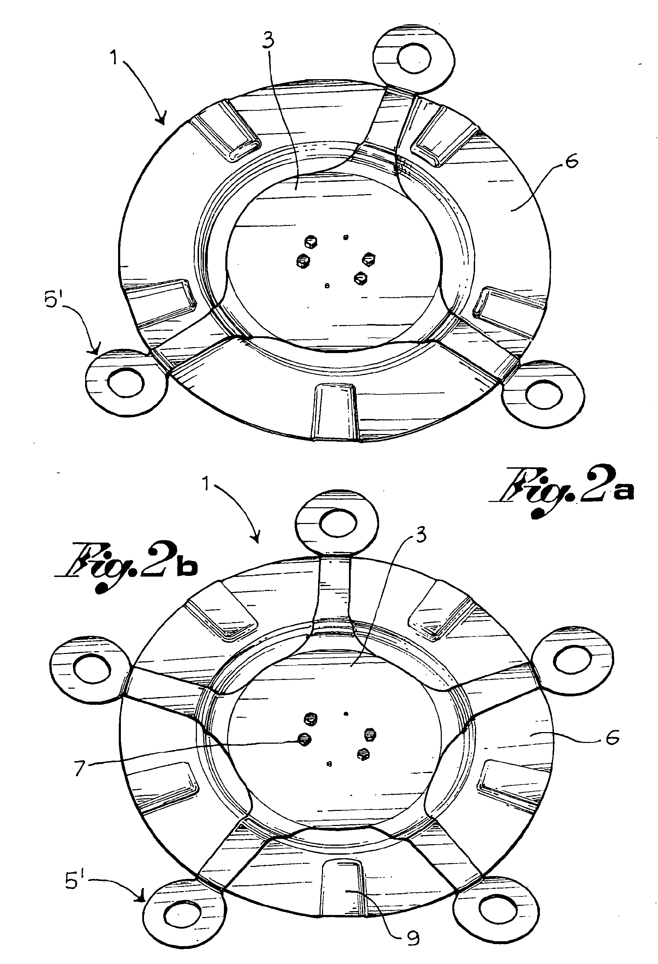

. - figures 2a and 2b show a view from above of the hubcap according to further embodiments;

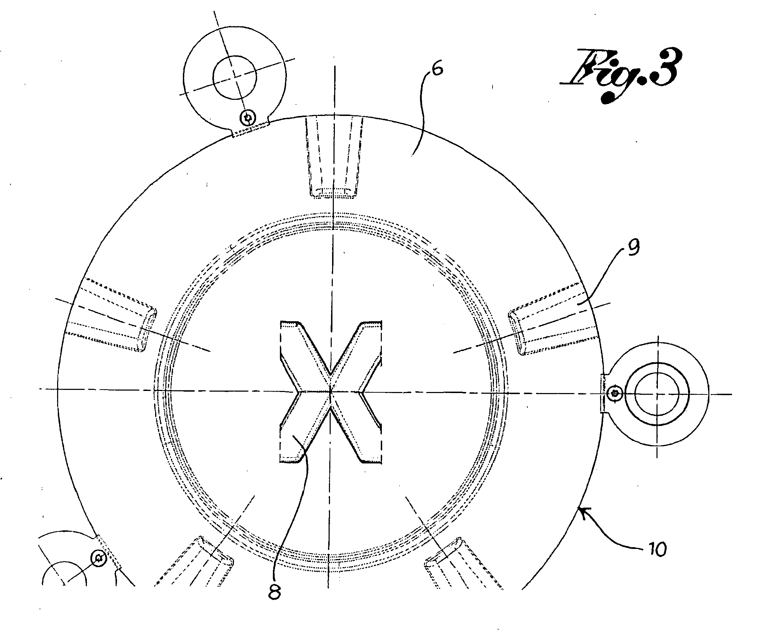

. - figure 3 shows an enlarged view of the hubcap of figure 2a;

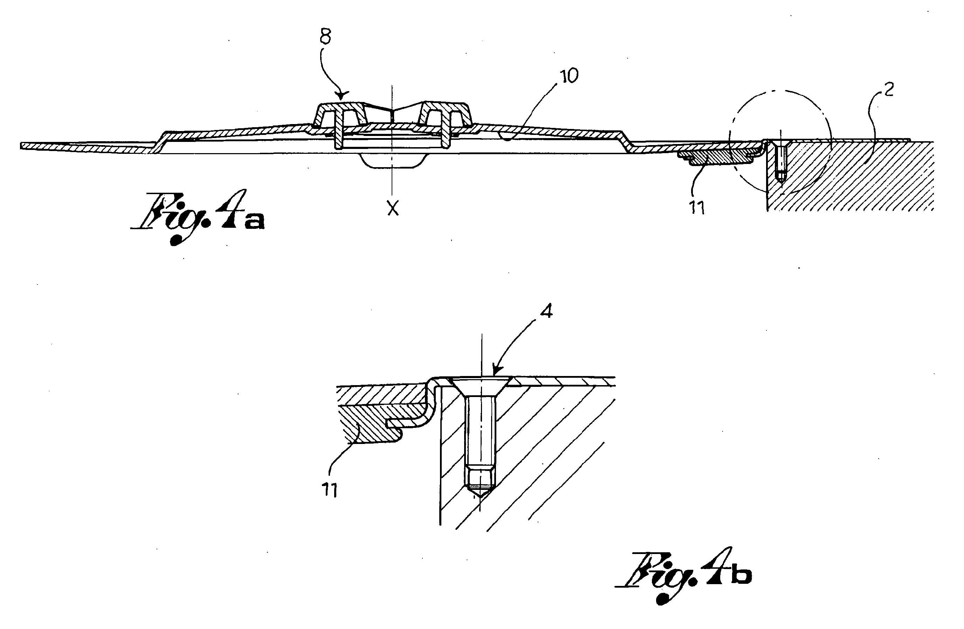

. - figures 4a and 4b show two transverse cross-sections of the hubcap according to a further embodiment, mounted on the wheel.

. With reference to the attached figures, reference number 1 globally indicates a hubcap for a wheel rim 2 of a large-sized vehicle, such as a lorry.

. The hubcap 1 comprises at least one protective plate 6, made of a first material and which can overlap at least partially the wheel rim 2, and releasable connection means 4, 5' for the connection of the protection plate 6 to the wheel rim 2.

. Preferably, the hubcap 1 also comprises at least one emblem 8 operatively connected to the protection plate 6.

. According to some variations, such emblem 8 reproduces in graphic form a figurative and/or denominative trademark, such as e. g. that of a vehicle manufacturer. As a consequence, in the using configuration of the hubcap, the emblem is positioned on the surface of the protection plate facing an external observer, in other words on the opposite surface to that facing the hub.

. According to a possible variation, the emblem 8 is connected to the protection plate 6 with releasable means. For example reversible connection means are known in the art as so-called "push-nuts". Such means permit the removal/replacement of the emblem should it be damaged during use.

. The hubcap 1 further comprises a support structure 3.

. The support structure 3 is made of a second material and comprises said connection means 4, 5'. The protection plate 6 is associated thereto to achieve connection with the wheel rim 2.

. In other words, the hubcap object of this invention can be separated in at least two components, that is the protection plate and the support structure.

. This involves that, in the event of wear or damage to one of these parts, it is possible to replace only the damaged part.

. Specifically, the support structure is subjected to mechanical stresses during use, so that it requires careful design and choice of materials.

. According to a possible variation, the first material of the protection plate 6 has a lower specific gravity than the second material of the support structure 3.

. As an alternative, the first material of the protection plate 6 has a lower yield strength than the second material of the support structure 3.

. Preferably, the protection plate 6 is made of aluminium or of its alloys.

. According to other embodiments, it may be made of so-called technical plastics able to resist to high temperatures to which the plate is subjected during use.

. According to a preferred embodiment, the support structure 3 is made of steel, preferably stainless.

. According to a possible embodiment, the connection means 4, 5' engage the wheel rim 2 on an orthogonal plane to the rotation axis X.

. According to a further embodiment, the connection means 4 comprise pins and/or screws.

. According to a still further embodiment, the connection means 5' comprise slots and/or through holes.

. According to these last two variations, the wheel rim 2 may itself be provided with connection means 5", for example in the form of perforations, preferably threaded. According to this embodiment, it is possible to simultaneously engage the holes 5' of the support structure 3 aligned to the connection means 5" of the wheel rim with at least one pin, one screw or one threaded rod 4.

. Preferably, the connection means 4, 5' protrude radially externally from the protection plate 6 in relation to the rotation axis X.

. In other words, when the protection plate 6 is associated to the support structure 3, the only component of the structure visible to an observer are the connection means 4, 5'. The reduced aesthetic impact can thus be easily understood, especially in the case such connection means are positioned for example on small wings or lobes protruding just for a little section beyond the plate 6.

. In one possible variation, the connection means 4, 5' are circumferentially equally spaced.

. According to a preferred embodiment, the support structure 3 and the protection plate 6 are coaxially connected with respect to the rotation axis X.

. According to a further variation, the protection plate 6 comprises fastening means 7 for fastening to the support structure 3. For example such fastening means comprise screws and/or rivets. As an alternative, the protection plate and the support structure may be welded together.

. According to a still further variation, the protection plate 6 is positioned on the surface of the support structure 3 designed to face the part opposite the wheel rim 2.

. In other words, in the embodiments with emblem, one of the surfaces of the protection plate 6, and specifically the one facing the hub, will be occupied by the support structure 3, while the opposite surface will be occupied by the emblem 8.

. Preferably, the protection plate 6 comprises a contact surface 10 suitable for contacting the support structure 3. For example, such contact surface 10 is rising or sinking from the residual surface surrounding it. This way correct positioning of the support structure 3 in relation to the protection plate 6 is ensured.

. Alternatively or additionally, the protection plate 6 comprises strengthening ribs 9. For example, these can extend internally at least partially from the outside edge of the protection plate 6.

. In other words they may be seen as raised or sunk spokes that increase the dimensional stability and the buckling resistance of the plate 6.

. According to a further embodiment, the support structure 3 also comprises an anti-vibration socle 11 able to reduce the vibrations deriving from the use of the wheel rim 2. Such socle 11 is made of a third material, preferably different from said first and second materials, with good vibration absorption properties, e.g. a plastic material.

. According to a still further embodiment, the anti-vibration socle 11 surrounds the support structure 3 at least partially.

. For example, it may be placed in the form of a circular crown between the support structure and the wheel rim. As an alternative it is composed of a series of separate socles positioned where vibrations are deemed greater.

. The present invention also relates to an assembly comprising a wheel rim 2 and a hubcap 1, according to one of the previous embodiments, associated to the wheel rim 2.

. Innovatively, the hubcap object of the present invention can be used on wheel rims of a much greater diameter than a standard car, generally speaking equal to or over 22 inches.

. Innovatively, moreover, the hubcap object of the present invention has a structure that allow its separation into its components, depending on the wear they are subjected to during use.

. Advantageously, the hubcap object of the present invention has an extremely simple structure, enabling an easy production and an easy use.

. Advantageously, the hubcap object of the present invention allows a high customisation degree of the aesthetic features thereof.

## Claims

1. Hubcap (1) for a wheel rim (2) having a rotation axis (X) of a large-sized vehicle, such as, for example a lorry or similar, comprising:
- at least one protection plate (6), made of a first material and which can overlap at least partially the wheel rim (2) to conceal it from view;
- releasable connection means (4, 5') for connecting the protection plate (6) to the wheel rim (2);
- a support structure (3) comprising said connection means (4, 5') and made of a second material, to which the protection plate (6) is associated to achieve connection thereof to the wheel rim (2)
**characterized by** the fact that the connection means (4, 5') engage the wheel rim (2) on an orthogonal plane to the rotation axis (X), and
protrude radially externally from the protection plate (6) with respect to the rotation axis (X).

2. Hubcap (1) according to claim 1, wherein the first material of the protection plate (6) has a lower specific gravity than the second material for the support structure (3).

3. Hubcap (1) according to claim 1 or 2, wherein the first material of the protection plate (6) has a lower yield strength than the second material for the support structure (3).

4. Hubcap (1) according to any of the previous claims, wherein the support structure (3) is made of steel, preferably stainless.

5. Hubcap (1) according to any of the previous claims, wherein the protection plate (6) is made of aluminium or its alloys.

6. Hubcap (1) according to any of the previous claims, wherein the support structure (3) and the protection plate (6) are coaxially connected in relation to the rotation axis (X).

7. Hubcap (1) according to any of the previous claims, wherein the protection plate (6) comprises fastening means (7) for fastening to the support structure (3).

8. Hubcap (1) according to any of the previous claims, wherein the connection means (4,5') are circumferentially equally space.

9. Hubcap (1) according to any of the previous claims, wherein the connection means (4) comprise pins and/or screws.

10. Hubcap (1) according to any of the previous claims, wherein the connection means (5') comprise slots and/or through holes.

11. Hubcap (1) according to any of the previous claims, wherein the protection plate (6) is positioned on the surface of the support structure (3) designed to face the opposite direction to the wheel rim (2).

12. Hubcap (1) according to any of the previous claims, wherein the protection plate (6) comprises a contact surface (10) suitable for contacting the support structure (3).

13. Hubcap (1) according to claim 12, wherein the contact surface (10) is rising or sinking from the residual surface surrounding so that it enables correct positioning of the support structure (3).

14. Hubcap (1) according to any of the previous claims, wherein the protection plate (6) comprises strengthening ribs (9).

15. Hubcap (1) according to any of the previous claims, comprising in addition at least one emblem (8) operatively connected to the protection plate (6).

16. Hubcap (1) according to claim 15, wherein the emblem (8) is joined to the protection plate (6) with releasable means.

17. Hubcap (1) according to any of the previous claims, wherein the support structure (3) further comprises an anti-vibration socle (11) able to reduce vibrations deriving from use of the wheel rim (2).

18. Hubcap (1) according to claim 17, wherein the anti-vibration socle (11) surrounds the support structure (3) at least partially.

19. Assembly comprising:
- a wheel rim (2);
- a hubcap (1) according to any of the previous claims, associated to the wheel rim (2).

## Patentansprüche

1. Nabenkappe (1) für eine Radfelge (2) mit einer Drehachse (X) eines Großfahrzeuges, so beispielsweise eines Lastwagens oder dergleichen, umfassend:
wenigstens eine Schutzplatte (6), die aus einem ersten Material besteht und wenigstens teilweise mit der Radfelge (2) überlappen kann, um diese der Sicht zu entziehen;
lösbare Verbindungsmittel (4, 5') zum Verbinden der Schutzplatte (6) mit der Radfelge (2);
eine Stützstruktur (3), die die Verbindungsmittel (4, 5') umfasst und aus einem zweiten Material besteht, womit die Schutzplatte (6) zusammenwirkt, um eine Verbindung hiervon mit der Radfelge (2) zu erreichen,
**dadurch gekennzeichnet, dass**
die Verbindungsmittel (4, 5') mit der Radfelge (2) an einer orthogonalen Ebene zu der Drehachse (X) in Eingriff sind und radial außen von der Schutzplatte (6) aus in Bezug auf die Drehachse (X) vorstehen.

2. Nabenkappe (1) nach Anspruch 1, wobei das erste Material der Schutzplatte (6) eine niedrigere relative Dichte (specific gravity) als das zweite Material für die Stützstruktur (3) aufweist.

3. Nabenkappe (1) nach Anspruch 1 oder 2, wobei das erste Material der Schutzplatte (6) eine niedrigere Fließgrenze (yield strength) als das zweite Material für die Stützstruktur (3) aufweist.

4. Nabenkappe (1) nach einem der vorhergehenden Ansprüche, wobei die Stützstruktur (3) aus Stahl, vorzugsweise rostfrei, besteht.

5. Nabenkappe (1) nach einem der vorhergehenden Ansprüche, wobei die Schutzplatte (6) aus Aluminium oder dessen Legierungen besteht.

6. Nabenkappe (1) nach einem der vorhergehenden Ansprüche, wobei die Stützstruktur (3) und die Schutzplatte (6) koaxial in Bezug auf die Drehachse (X) verbunden sind.

7. Nabenkappe (1) nach einem der vorhergehenden Ansprüche, wobei die Schutzplatte (6) Befestigungsmittel (7) zum Befestigen an der Stützstruktur (3) umfasst.

8. Nabenkappe (1) nach einem der vorhergehenden Ansprüche, wobei die Verbin-dungsmittel (4, 5') umfänglich gleichmäßig beabstandet sind.

9. Nabenkappe (1) nach einem der vorhergehenden Ansprüche, wobei die Verbin-dungsmittel (4) Stifte und/oder Schrauben umfassen.

10. Nabenkappe (1) nach einem der vorhergehenden Ansprüche, wobei die Verbin-dungsmittel (5') Schlitze und/oder Durchgangslöcher umfassen.

11. Nabenkappe (1) nach einem der vorhergehenden Ansprüche, wobei die Verbin-dungsplatte (6) an der Oberfläche der Stützstruktur (3) mit einer Ausgestaltung dafür positioniert ist, in die entgegengesetzte bzw. gegenüberliegende Richtung bezüglich der Radfelge (2) zu weisen.

12. Nabenkappe (1) nach einem der vorhergehenden Ansprüche, wobei die Schutzplatte (6) eine Kontaktoberfläche (10) umfasst, die geeignet ist, mit der Stützstruktur (3) in Kontakt zu treten.

13. Nabenkappe (1) nach Anspruch 12, wobei die Kontaktoberfläche (10) bezüglich der umgebenden restlichen Oberfläche erhöht oder abgesenkt ist, damit eine korrekte Positionierung der Stützstruktur (3) möglich wird.

14. Nabenkappe (1) nach einem der vorhergehenden Ansprüche, wobei die Schutzplatte (6) Verstärkungsrippen (9) umfasst.

15. Nabenkappe (1) nach einem der vorhergehenden Ansprüche, zusätzlich umfassend wenigstens ein Logo (8), das funktionell mit der Schutzplatte (6) verbunden ist.

16. Nabenkappe (1) nach Anspruch 15, wobei das Logo (8) mit der Schutzplatte (6) durch lösbare Mittel zusammengefügt ist.

17. Nabenkappe (1) nach einem der vorhergehenden Ansprüche, wobei die Stützstruktur (3) des Weiteren einen Antivibrationssockel (11) umfasst, der dazu in der Lage ist, von der Verwendung der Radfelge (2) herrührende Vibrationen zu verringern.

18. Nabenkappe (1) nach Anspruch 17, wobei der Antivibrationssockel (11) die Stütz-struktur (3) wenigstens teilweise umgibt.

19. Anordnung, umfassend:
eine Radfelge (2);
eine Nabenkappe (1) nach einem der vorhergehenden Ansprüche, die mit der Radfelge (2) zusammenwirkt.

## Revendications

1. Cache-moyeu (1) destiné à une jante de roue (2) ayant un axe de rotation (X) d'un véhicule grande taille, tel que, par exemple, un camion ou similaire, comprenant:
- au moins une plaque de protection (6), composée d'un premier matériau et qui peut recouvrir au moins en partie la jante de roue (2) pour la cacher ;
- des moyens de liaison détachables (4, 5') destinés à relier la plaque de protection (6) à la jante de roue (2);
- une structure de support (3) comprenant lesdits moyens de liaison (4, 5') et composée d'un second matériau, à laquelle la plaque de protection (6) est associée pour réaliser une liaison de celle-ci à la jante de roue (2), **caractérisé par le fait que** les moyens de liaison (4, 5') mettent en prise la jante de roue (2) sur un plan orthogonal à l'axe de rotation (X) et font radialement saillie vers l'extérieur depuis la plaque de protection (6) par rapport à l'axe de rotation (X).

2. Cache-moyeu (1) selon la revendication 1, dans lequel le premier matériau de la plaque de protection (6) a une gravité spécifique inférieure à celle du second matériau de la structure de support (3).

3. Cache-moyeu (1) selon la revendication 1 ou 2, dans lequel le premier matériau de la plaque de protection (6) a une limite d'élasticité inférieure à celle du second matériau de la structure de support (3).

4. Cache-moyeu (1) selon l'une quelconque des revendications précédentes, dans lequel la structure de support (3) se compose d'acier, de préférence inoxydable.

5. Cache-moyeu (1) selon l'une quelconque des revendications précédentes, dans lequel la plaque de protection (6) se compose d'aluminium ou d'alliage d'aluminium.

6. Cache-moyeu (1) selon l'une quelconque des revendications précédentes, dans lequel la structure de support (3) et la plaque de protection (6) sont reliées de manière coaxiale par rapport à l'axe de rotation (X).

7. Cache-moyeu (1) selon l'une quelconque des revendications précédentes, dans lequel la plaque de protection (6) comprend des moyens de fixation (7) pour fixation à la structure de support (3).

8. Cache-moyeu (1) selon l'une quelconque des revendications précédentes, dans lequel les moyens de liaison (4, 5') sont circonférentiellement espacés à distance égale.

9. Cache-moyeu (1) selon l'une quelconque des revendications précédentes, dans lequel les moyens de liaison (4) comprennent des chevilles et/ou des vis.

10. Cache-moyeu (1) selon l'une quelconque des revendications précédentes, dans lequel les moyens de liaison (5') comprennent des fentes et/ou des trous traversants.

11. Cache-moyeu (1) selon l'une quelconque des revendications précédentes, dans lequel la plaque de protection (6) est positionnée sur la surface de la structure de support (3) conçue pour être tournée vers la direction opposée à la jante de route (2).

12. Cache-moyeu (1) selon l'une quelconque des revendications précédentes, dans lequel la plaque de protection (6) comprend une surface de contact (10) appropriée pour entrer en contact avec la structure de support (3).

13. Cache-moyeu (1) selon la revendication 12, dans lequel la surface de contact (10) monte ou descend par rapport aux environs de surface restants de sorte qu'elle permette un positionnement correct de la structure de support (3).

14. Cache-moyeu (1) selon l'une quelconque des revendications précédentes, dans lequel la plaque de protection (6) comprend des nervures de renforcement (9).

15. Cache-moyeu (1) selon l'une quelconque des revendications précédentes, comprenant en plus au moins un emblème (8) fonctionnellement relié à la plaque de protection (6).

16. Cache-moyeu (1) selon la revendication 15, dans lequel l'emblème (8) est lié à la plaque de protection (6) à l'aide de moyens détachables.

17. Cache-moyeu (1) selon l'une quelconque des revendications précédentes, dans lequel la structure de support (3) comprend en outre un socle anti-vibration (11) capable de réduire les vibrations découlant de l'utilisation de la jante de roue (2).

18. Cache-moyeu (1) selon la revendication 17, dans lequel le socle anti-vibration (11) entoure, au moins en partie, la structure de support (3).

19. Ensemble comprenant :
- une jante de roue (2) ;
- un cache-moyeu (1) selon l'une quelconque des revendications précédentes, associé à la jante de roue (2).
